Europäisches Patentamt

European Patent Office

Office européen des brevets

(11) Publication number: **0 352 797**
**A2**

## (12) EUROPEAN PATENT APPLICATION

(21) Application number: 89113896.8

(22) Date of filing: 27.07.89

(51) Int. Cl.⁴: **G01N 21/88** , **G01N 21/55**

(30) Priority: 29.07.88 IT 6772088

(43) Date of publication of application:
**31.01.90 Bulletin 90/05**

(84) Designated Contracting States:
**DE ES FR GB SE**

(71) Applicant: **FIAT AUTO S.p.A.**
**Corso Giovanni Agnelli 200**
**I-10135 Torino(IT)**

(72) Inventor: **Damiani, Sergio**
**Via Taggia 38**
**I-10100 Torino(IT)**
Inventor: **Varrone, Pier Giorgio**
**Via Adamello 11**
**I-100025 Pino Torinese(IT)**

(74) Representative: **Jorio, Paolo et al**
**STUDIO TORTA Società Semplice Via Viotti 9**
**I-10121 Torino(IT)**

(54) **A method for detecting defects on specular surfaces and device operating according to this method.**

(57) A method for detecting defects in a specular surface, comprising the operations of directing at least one light beam (2) emitted from at least one light source (1) towards a surface (3) under examination and detecting a beam (4) reflected from the surface (3) by image recording means (5) disposed specularly of the source (1) with respect to the surface (3) itself; there is likewise described a device (10) operating according to this method and comprising at least one illuminator (1) having a small surface of narrow elongate rectilinear form acting to emit a light beam (2) towards the surface (3) under test and a matrix type television camera (5) disposed specularly of the illuminator (1) with respect to this surface (3) and orientated in such a way as to have in its field of view a zone of incidence of the light beam (2) on the surface (3) and to intercept directly a corresponding reflected beam (4).

Fig.3

# A METHOD FOR DETECTING DEFECTS ON SPECULAR SURFACES AND DEVICE OPERATING ACCORDING TO THIS METHOD

The present invention relates to a method for detecting defects on flat or curved specular surfaces, for example parts of motor vehicle bodies, metal and non-metal strips or sheets, and to a device operating according to this method.

In the present description "specular" is defined as a shiny surface with regular or continuous reflection characteristics. The term "defect" is used to define any irregularity of a specular surface such as to cause a variation in the direction or intensity of a reflected light beam with respect to a surrounding region of the surface itself, at the same angle of incidence.

As far as the above is concerned, "defects" are considered to include geometric irregularities (concavity and asperity) which deviate the reflected ray with respect to its theoretical direction, as well as non-shiny regions even if they are geometrically regular. On the other hand variations in colour are not considered as defects if they do not cause variations in the intensity of the reflected light.

Devices for detecting surface defects of the said type are known. Such devices are generally based on a method of detection which consists in providing a source of illumination adapted to emit a beam of light towards a surface under examination, a television camera very close to the said source and a retro-reflecting element of discrete type, for example a prism or sphere retro-reflector, along the theoretical path of the beam reflected from the surface under examination. The light beam is reflected from the retro-reflector towards the surface itself and from this towards the source, or the television camera close to it. An irregularity of the surface examined causes a deviation of at least a portion of the light beam reflected out of the field of view of the television camera, whilst the region surrounding the defect reflects this beam in a regular manner; therefore, the defect is seen by the television camera as a dark spot on a light field.

The known method briefly described has a disadvantage. The minimum detectable dimensions of a defect depend, not only on the resolution of the television camera, but also on the "fineness" of the structure of the retro-reflector which, because of its nature, cannot be smooth; therefore, these dimensions cannot be indefinitely reduced and constitute an intrinsic limit of the method.

The object of the present invention is the definition of a method for the detection of defects in specular surfaces, as well as the provision of a device utilising this method, which permits the said disadvantage of known methods to be overcome. The said object is achieved with the present invention in that it relates to a method for the detection of defects in a specular surface, characterised by the fact that it comprises the operations of directing at least one light beam emitted from at least one light source towards a surface under examination and detecting a beam reflected from the said surface by means of image recording means disposed specularly with respect to the said source in relation to the said surface.

The present invention likewise relates to a device for the detection of defects on a specular surface, of the type comprising at least one light source adapted to emit a light beam towards the said surface, and image recording means, characterised by the fact that the said image recording means are disposed specularly with respect to the said light source in relation to the said surface and orientated in such a way as to have in its field of view a region of incidence of the said light beam on the said surface in such a way as to intercept directly a corresponding reflected beam.

For a better understanding of the present invention a preferred embodiment is described hereinafter, purely by way of non-limitative example, with reference to the attached drawings, in which:

Figures 1 and 2 schematically illustrate a method of detecting defects in specular surfaces according to the present invention; and

Figure 3 illustrates an embodiment of a device for detecting defects in specular surfaces, operating according to this method.

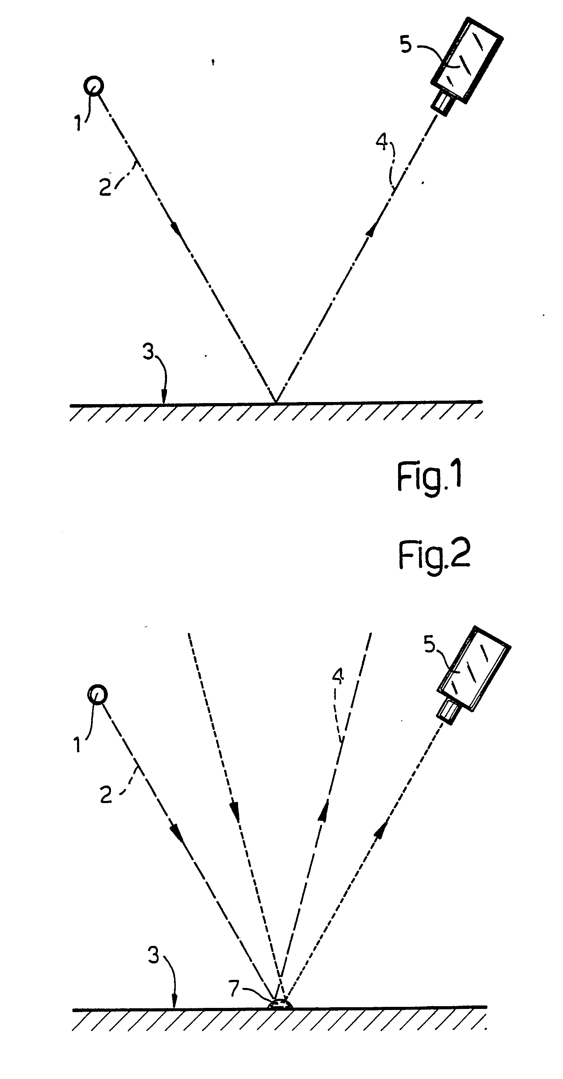

According to the method the subject of the present invention the detection of defects in specular surfaces is effected (Figure 1) by arranging a light source 1 provided with a small illuminating surface, as will be explained more clearly hereinbelow, in such a way that a light beam 2 emitted from it is incident on a specular surface 3 to be examined. The incident beam 2 is reflected from the specular surface 3 and the resultant reflected beam 4 is intercepted by an image recording device 5 conveniently a television camera, diposed specularly with respect to the source 1 and orientated in such a way that its field of view 6 on the surface 3 contains the zone of incidence of the beam 2.

In the presence of a defect 7 (Figure 2) of geometric type, that is to say such as to cause the angle of reflection of a light beam which strikes it to vary, the television camera 5 "sees" reflected on the defect, or at least on a portion of it, an outer zone of the source 1 in place of the source 1 itself; therefore, if the source 1 has apparent dimensions very much greater than the defect, the television camera 5 sees a light zone (the source) with a dark zone within it (the defect).

It is evident that the method functions in an analogous manner for defects which do not involve geometric irregularities and therefore deviation of the reflected beam, but only attenuation of the specularity of the surface; in this case the defect is again detected as a dark zone which, however, does not correspond geometrically to an outer zone of the source but to a zone of the source the luminous contribution of which is lost by the effect of the defect in the specularity of the surface under test. The method described can conveniently be used also for curved surfaces by suitably taking into account the direction of the reflected beam imposed by the curvature of the surface and consequently appropriately positioning the television camera.

The dimensions of the source must be small so as to prevent the television camera from being able to see reflected in a defect a different zone from the "theoretical" zone of the source which would have to be reflected in that point in the absence of defects but still belonging to the source itself; in this case there would not in fact be any luminous contrast between the defect and the background, and the defect would not be detected.

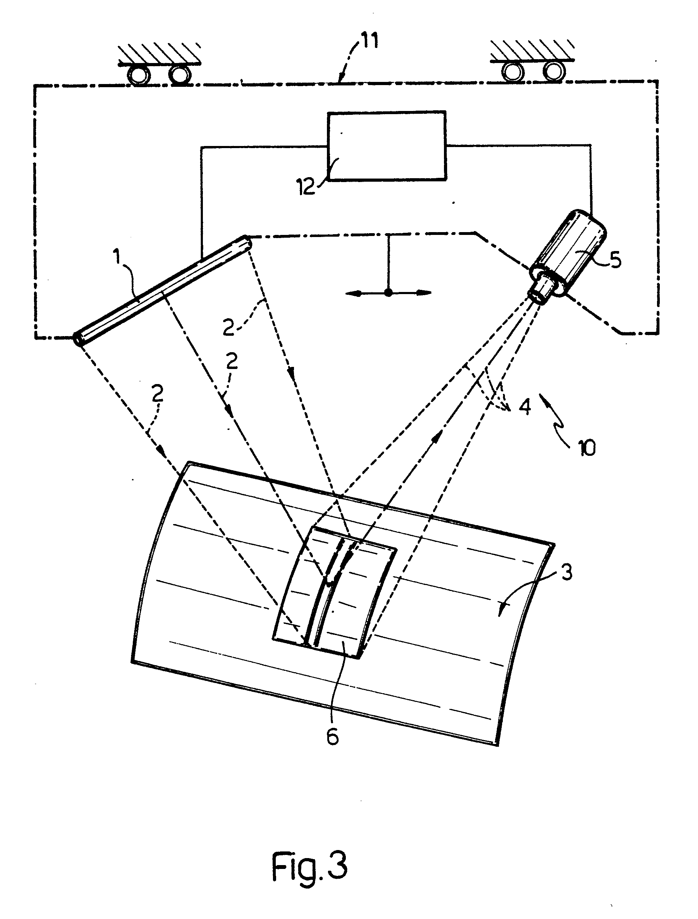

The method described can be conveniently employed for the examination of extended surfaces, utilising a light source of linear type rather than point type, as will appear clearly from the description of a preferred embodiment of a device 10 for performing this method, illustrated in Figure 3, and described hereinafter utilising the same reference numerals to indicate the same or corresponding elements to those already described with reference to Figures 1 and 2.

The device 10 comprises an illuminator 1 in the form of a relatively long narrow rectilinear strip, conveniently formed with a low power solid state device and a square matrix television camera 5 disposed specularly in relation to the source 1 with respect to a surface 3 to be examined, and orientated in such a way that its field of view 6 on the surface 3 contains the zone of incidence of the beam 2 emitted from the illuminator 1.

The image of the illuminator 1 in the matrix of the television camera 5 evidently consists of a rectilinear continuous light strip or a curve according as the surface 3 is flat or curved; defects due to a reduction in the specularity are therefore seen as dark spots. Since defects due to geometric irregularities have limited dimensions and present an anomalous inclination along the whole of their periphery there is always a zone of the defect which reflects within the matrix of the television camera a region outside the illuminator 1, which is therefore again seen as a dark spot or an interruption in the light strip constituting the reflected image of the illuminator 1 in the matrix of the television camera 5.

The dimensions of the illuminator are calculated in dependence on the field of view of the television camera and the maximum envisaged curvature of the surface under test as far as the length is concerned, and in dependence on the minimum defect dimensions which must be detected and the minimum slope of its sides as far as the width is concerned, bearing in mind that the projection of the sides of the defect must fall outside the illuminator as far as the width is concerned if the detection of the defect is to be possible.

The device 10 further includes means 11 for relative movement of the illuminator-television camera unit with respect to the surface 3 under examination. Such movement means 11 are not described in detail in that they are of conventional type; they are schematically shown in Figure 3 as a carriage on which the illuminator 1 and the television camera 5 are mounted.

The device 1 finally includes control means 12 of conventional type for controlling a pulsing of the illumination of the light source 1 and synchronisation of it with the frame blanking interval of the television camera 5, in such a way as to detect surfaces in relative motion with respect to it with successive substantially instantaneous images.

The operation of the device 10 appears clear from the above. The examination of extended surfaces takes place by displacing the television camera-illuminator unit with respect to the surfaces themselves (or vice versa).

The dimensions of the matrix and therefore of the field of view compensate the curvature and/or variations in distance between the television camera and the surface under examination. The zone which is processed with each acquired image is defined by the light strip which appears in the matrix of the television camera. In addition to possible dark spots on the said strip, which correspond to defects in the region of incidence of the beam emitted from the illuminator 1, it is possible that light spots may appear in the dark zone in the matrix outside the strip itself; such light spots correspond to defects situated outside the said zone of incidence, which at least with a portion thereof can cause a direct reflection of the illuminator in the matrix of the television camera. These "white" defects must not be taken into consideration in that they are the same as those which appear "black" when their own zone is under examination.

From a study of the characteristics of the method and device formed according to the present invention the advantages which it allows to be obtained are apparent.

In particular, thanks to the absence of the discrete reflecting elements it is possible to detect defects without limitations on their dimensions.

Moreover, the method is affected only to a minimum extent by variations in the colour of the surfaces and by the possible presence of particular surface treatments (for example paints with metallised pigments) provided that the surfaces themselves are uniformly and sufficiently reflecting.

Finally, it is clear that the device 10 described can have modifications and variations introduced thereto which do not depart from the protective ambit of the present invention. The television camera and the illuminator can be of any convenient type. For example, the illuminator 1 can be lit up continuously and associated with a high speed shutter on the television camera. The relative motion between the illuminator-television camera unit and the surface under examination can be achieved by means for displacing the surface itself; this arrangement is, for example, convenient when the surface under examination is a continuous strip. Finally, illuminators and/or television cameras connected to a single control unit can be employed.

**Claims**

1. A method for detecting defects in a specular surface, characterised by the fact that it comprises the operations of directing at least one light beam (2) emitted from at least one light source (1) towards a surface (3) under examination, and detecting a beam (4) reflected from the said surface (3) by image recording means (5) disposed specularly with respect to the light source (1) in relation to the said surface (3).

2. A method according to Claim 1, characterised by the fact that the said light source (1) has an elongate rectilinear form with narrow width.

3. A method according to Claim 1 or Claim 2, characterised by the fact that the said light source comprises an illuminator (1) using solid state devices.

4. A method according to any preceding Claim, characterised by the fact that the said image recording means comprise at least one television camer (5).

5. A method according to any preceding Claim, characterised by the fact that it includes a further operation of relative movement of the light source (1) and the said image recording means (5) with respect to the said surface (3).

6. A device for the detection of defects in a specular surface, of the type comprising at least one light source adapted to emit a beam of light towards the said surface, and image recording means, characterised by the fact that the said image recording means (5) are disposed specularly with respect to the said light source (1) in relation to the said surface (3) and orientated in such a way as to have a field of view including a zone of incidence of the said light beam (2) on the said surface (3) and to intercept directly a corresponding reflected beam (4).

7. A device according to Claim 6, characterised by the fact that the said light source (1) has an elongate rectilinear form with narrow width.

8. A device according to Claim 6 or Claim 7, characterised by the fact that it includes means (11) for effecting relative movement of the said light source (1) and the said image recording means (5) with respect to the said surface (3).

9. A device according to any of Claims from 6 to 8, characterised by the fact that the said light source includes an illuminator (1) using solid state device.

10. A device according to any of Claims from 6 to 9, characterised by the fact that the said image recording means comprise at least one television camera (3).

11. A device according to Claim 10, characterised by the fact that the said television camera (5) is of the matrix type.

12. A device according to Claim 10 or Claim 11, characterised by the fact that it includes control means (12) for synchronisation of the illumination time of the illuminator (1) and the frame blanking interval of the said television camera (5).

Fig.1

Fig.2

Fig.3